# EUROPEAN PATENT APPLICATION

(11) **EP 4 723 513 A1**
(43) Date of publication of application: **08.04.2026**
(21) Application number: 24829810.1
(22) Date of filing: 04.02.2024
(51) Int. Cl.: H04B 10/294

(54) **SIGNAL FLATNESS ADJUSTMENT METHOD, ELECTRONIC DEVICE AND COMPUTER-READABLE MEDIUM**

(30) Priority: 29.06.2023 CN 202310794526
(71) Applicant: ZTE CORPORATION, Shenzhen, Guangdong 518057 (CN)
(72) Inventor: SHANG, Wendong, Shenzhen, Guangdong 518057 (CN); SHI, Hu, Shenzhen, Guangdong 518057 (CN)
(74) Representative: Ziebig Hengelhaupt Intellectual Property Attorneys Patentanwaltskanzlei PartGmbB
(86) International application number: PCT/CN2024/075787
(87) International publication number: WO 2025/001150

(57) **Abstract**

Provided in the embodiment of the present application are a signal flatness adjustment method, an electronic device and a computer-readable medium. The method comprises: determining signal flatness of each optical channel among a plurality of optical channels of a multiplex section to be adjusted in a DWDM system; taking an optical channel, the signal flatness of which does not meet a predetermined threshold, among the plurality of optical channels as a target optical channel; and adjusting a power attenuation amount of the target optical channel until the signal flatness of an optical signal which is transmitted by means of the target optical channel meets the predetermined threshold.

## Description

### CROSS-REFERENCE TO RELATED APPLICATIONS

The present application is proposed based on and claims priority to Chinese Application No. 2023107945260, filed with the Chinese Patent Office on June 29, 2023, with the title "SIGNAL FLATNESS ADJUSTMENT METHOD, APPARATUS AND ELECTRONIC DEVICE", the disclosure of which is hereby incorporated by reference in its entirety.

### TECHNICAL FIELD

The present application relates to the field of optical communication technology, and in particular relates to a signal flatness adjustment method, an electronic device, and a computer-readable storage medium.

### BACKGROUND

With the rapid development of bandwidth intensive services such as 5G, cloud computing, mobile internet, and ultra-high definition video, the network traffic will continue to maintain high-speed growth. For example, major domestic and foreign operators have proposed transmission requirements for High-Capacity Dense Wavelength Division Multiplexing (DWDM) systems with high performance for 400G and ultra 400G (such as 600G, 800G, etc.).

However, for DWDM systems such as high-performance for 400G and ultra 400G, how to ensure the transmission performance of signals is still an urgent technical problem that needs to be solved in this field.

### SUMMARY

The purpose of the embodiments of the present application is to provide a signal flatness adjustment method, an electronic device and a computer-readable medium.

To solve the above technical problems, the embodiments of the present application are implemented through the following aspects.

In the first aspect, the embodiment of the present application provides a signal flatness adjustment method, comprising: determining signal flatness of each optical channel among the plurality of optical channels of the multiplex section to be adjusted in the DWDM system; taking the optical channel, the signal flatness of which does not meet the predetermined threshold, among the plurality of optical channels as the target optical channel; and adjusting the power attenuation amount of the target optical channel until the signal flatness of the optical signal which is transmitted by means of the target optical channel meets the predetermined threshold.

In the second aspect, the embodiment of the present application provides an electronic device, comprising: a memory, a processor and computer-executable instructions stored in the memory and executable on the processor, wherein the computer executable instructions, when executed by the processor, implements the steps of the method described in the first aspect.

In the third aspect, the embodiment of the present application provides a computer-readable storage medium for storing computer-executable instructions that, when executed by the processor, implements the steps of the method described in the first aspect.

### BRIEF DESCRIPTION OF DRAWINGS

In order to provide a clearer explanation of the embodiments or technical solutions in the present application or existing technology, a brief introduction will be given to the accompanying drawings required for the description of the embodiments or existing technology. It is obvious that the accompanying drawings described below are only some of the embodiments recorded in the present application. For those skilled in the art, other drawings can be obtained based on these drawings without requiring creative labor.
Fig. 1 shows a schematic diagram of the structure of the DWDM system provided in the embodiments of the present application.
Fig. 2 shows a schematic diagram of the structure of ROADM provided in the embodiments of the present application.
Fig. 3 shows a flowchart of the signal flatness adjustment method provided in the embodiments of the present application.
Fig. 4 shows a schematic diagram of adjusting the power attenuation amount of the sub-channel provided by the embodiments of the present application.
Fig. 5a shows the first schematic diagrams of the signal spectrum provided by the embodiments of the present application.
Fig. 5b shows the second schematic diagram of the signal spectrum provided by the embodiments of the present application.
Fig. 5c shows the third schematic diagram of the signal spectrum provided by the embodiments of the present application.
Fig. 5d shows the fourth schematic diagram of the signal spectrum provided by the embodiments of the present application.
Fig. 6 shows a schematic diagram of the structure of the signal flatness adjustment device provided in the embodiments of the present application.
Fig. 7 is a schematic diagram of the hardware structure of the electronic device implementing the signal flatness adjustment method provided in the embodiments of the present application.

### DETAILED DESCRIPTION

In order to enable those skilled in the art to better understand the technical solution in the present application, the following will provide a clear and complete description of the technical solution in the embodiments of the present application in conjunction with the accompanying drawings. Obviously, the described embodiments are only a part of the embodiments of the present application, not all of them. Based on the embodiments in the present application, all other embodiments obtained by those skilled in the art without creative labor should fall within the scope of protection of the present application.

For the problem of poor transmission performance in related technologies such as the high-performance for 400G and ultra 400G (600G, 800G, etc.) DWDM systems, the present application considers that the implementation of high-performance for 400G and ultra 400G (such as 600G, 800G, etc.) DWDM systems requires a higher baud rate (Baud). Consequently, the channel bandwidth occupied by signal transmission will also increase. According to the loss coefficient curve of optical fibers, the attenuation coefficient of optical fibers varies at different frequency points. Wherein when the frequency range occupied by the transmission channel is small, the attenuation curve within the transmission channel can be considered as a constant. When the frequency range occupied by the transmission channel increases, the difference in attenuation between the maximum and minimum frequency points within the entire transmission channel cannot be ignored. However, as the difference in attenuation between the maximum and minimum frequency points within the transmission channel increases, the non-flatness of the transmission channel will also become non negligible. Therefore, when the signal is transmitted through this transmission channel, the flatness of the transmission channel will be transmitted to the signal, resulting in a decrease in the flatness of the signal and a decrease in the signal-to-noise ratio on the low power side of the entire signal, and in severe cases, the loss of effective information in the signal, affecting the transmission performance of the signal and leading to poor transmission performance of the DWDM system.

In this regard, the present application provides a signal flatness adjustment method, an electronic device, and a computer-readable medium. By adjusting the flatness of the optical signal transmitted in the DWDM system, the non-flatness of the transmission channel caused by fiber loss can be compensated, and the loss of effective components in the optical signal can be avoided. This ensures that the flatness of the entire signal after passing through the DWDM system can meet the reception performance requirements, thereby improving the transmission performance of the DWDM system.

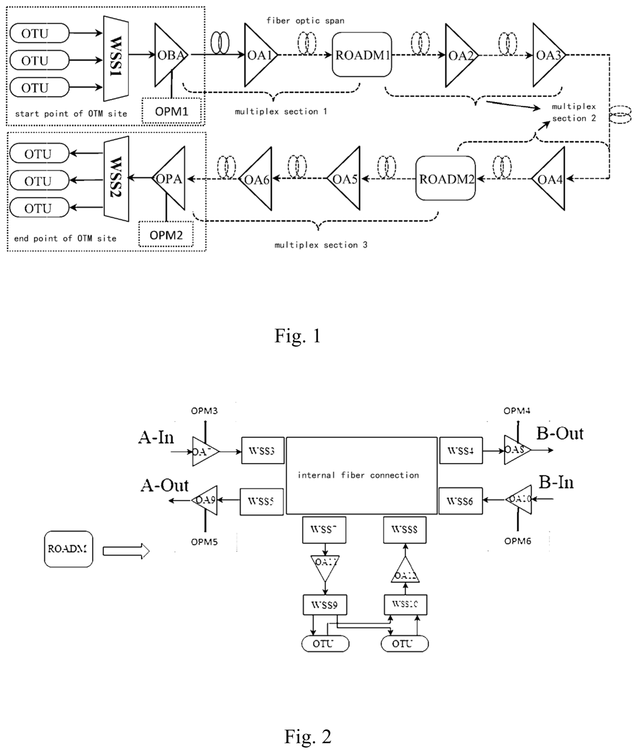

To facilitate understanding, as shown in Fig. 1, it is a schematic diagram of the structure of the DWDM system provided in the embodiment of the present application. The DWDM system comprises a reconfigurable optical add drop multiplexer (ROADM) networking (unidirectional), which functions to dynamically adjust the wavelength of add or drop service through remote reconfiguration.

Taking a service path in the DWDM system as an example, the optical signal to be transmitted passes through the site start point of the optical termination multiplexer (OTM), optical multiplex sections (such as multiplex section 1, multiplex section 2, and multiplex section 3), ROADM sites (such as ROADM1 and ROADM1), and finally reaches the site end point of the OTM, completing the optical signal transmission. The schematic diagram of the structure for ROADM site can be, but is not limited to, that shown in Fig. 2. The optical signal arriving at the ROADM site is input via the A-In (or B-In, or OTU) and output via the B-Out (or A-Out) to achieve optical signal transmission. The components involved in the DWDM system are introduced below.

Optical Transform Unit (OUT): it is configured for access processing of optical signals.

OTM: it is configured for inserting data and other service signals from optical transmission equipment (SDH) into DWDM lines through wavelength conversion and multiplexing unit, and to demultiplex signals from DWDM lines through demultiplexing unit.

Wavelength Selector (WSS) can be used to control the channel bandwidth of signal light transmission (dynamically setting the transmission channel interval as needed) and the transmission direction of signal light. In addition, the wide channel can be switched into multiple sub-channels and the power of each sub-channel can be adjusted. The current mainstream WSS manufacturers have launched WSS devices with a minimum frequency interval width of 12.5G or 6.25GHz.

Optical Amplifier (OA): when a signal passes through devices with loss characteristics such as optical fibers or WSS, the signal will experience attenuation. To ensure the transmission performance of the system, OA is used to compensate for this attenuation and ensure that the signal power is restored to the desired level. Wherein usually there is only one optical amplifier at the site, which is the optical amplification site. OA1 forms an optical amplification site as shown in Fig. 2.

In addition, as shown in Fig. 1 and Fig. 2, OBA is a power amplifier, OPM is an optical power meter or optical monitoring module, and OPA is a preamplifier.

It can be understood that Fig. 1 and Fig. 2 are only schematic diagrams of the DWDM system. In practical applications, the DWDM system may include more or fewer devices than Fig. 1 and Fig. 2, and there is no limitation here.

Based on this, the technical solution provided in the present application will be further introduced in conjunction with the accompanying drawings and embodiments, as follows.

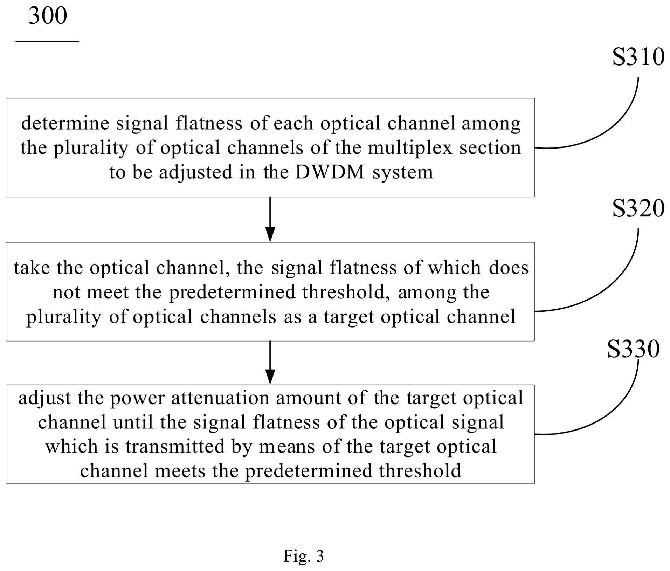

Fig. 3 shows a flowchart of the signal flatness adjustment method 300 provided by the embodiment of the present application, which may include but is not limited to the following steps.

S310: the signal flatness of each optical channel among a plurality of optical channels of the multiplex section to be adjusted in the DWDM system is determined.

Wherein the multiplex sections in the DWDM system can be defined according to actual needs. For example, as shown in Fig. 1, the transmission channels in the DWDM system can be defined as three multiplex sections, such as multiplex section 1, multiplex section 2, and multiplex section 3.

Based on this, the multiplex section to be adjusted may include but is not limited to one or more of the defined multiple multiplex sections. In this embodiment, there can be multiple ways to determine the multiplex sections to be adjusted. For example, the multiplex section to be adjusted can be determined by monitoring the flatness of the optical signal in the DWDM system. For example, the transmission channel in the DWDM system can be divided into multiple multiplex sections (such as multiplex section 1, multiplex section 2, multiplex section 3). When the flatness of the optical signal transmitted through a certain multiplex section does not meet the predetermined threshold (which can be determined according to the reception requirements of the reception terminal), the certain multiplex section can be determined as the multiplex section to be adjusted.

Alternatively, the multiplex section to be adjusted can also be specified by the user based on experience, such as designating one of multiple multiplex sections as the multiplex section to be adjusted, there is no limitation here,
In this case, as a possible implementation, there are also various ways to determine the signal flatness of a plurality of optical channels in the multiplex section to be adjusted of the DWDM system. For example, the spectral shape of each optical channel in the multiplex section to be adjusted can be monitored by OPM, and the signal flatness of each optical channel can be determined according to the spectral shape of each optical channel. Wherein as shown in Fig. 1, the OPM can be arranged at the signal output terminal of the multiplex section to be adjusted, that is to say, the aforementioned signal flatness is the flatness of the output signal.

S120, the optical channel, the signal flatness of which does not meet the predetermined threshold, among the plurality of optical channels is taken as the target optical channel.

As mentioned earlier, the predetermined threshold can be determined according to the reception performance requirements of the DWDM system, but is not limited to this. In addition, the target optical channel can be one or more, there is no limitation here.

S130, the power attenuation amount of the target optical channel is adjusted until the signal flatness of the optical signal which is transmitted by means of the target optical channel meets the predetermined threshold.

Wherein in this embodiment, the signal flatness is adjusted (or preconfigured, compensated) at the granularity of an individual optical channel to achieve the purpose of adjusting the optical signal flatness of the multiplex section to be adjusted, so that the signal flatness after passing through this DWDM system can meet the reception performance requirements and ensure the transmission performance of the DWDM system.

It should be noted that, when there are multiple multiplex sections to be adjusted in the DWDM system, according to the optical signal transmission direction in the DWDM system, the signal flatness of each multiplex section to be adjusted can be adjusted in sequence until the signal flatness of each multiplex section to be adjusted meets the predetermined threshold. The adjustment process of the signal flatness of each multiplex section to be adjusted can refer to the relevant descriptions in the aforementioned S110-S130, and achieve the same or corresponding technical effect, which will not be repeated here. It can be understood that the predetermined thresholds for different multiplex sections can be the same or different.

Based on this, in one implementation, the present application adjusts the power attenuation amount of the target optical channel. In addition to adjusting at the granularity of an individual optical channel as mentioned above, the individual optical channel can also be further divided, and the signal flatness can be adjusted at the granularity of the divided sub-channels to improve the adjustment accuracy and further enhance the transmission performance of the DWDM system.

For example, as shown in Fig. 1 and Fig. 2, considering that the DWDM system includes WSS, the WSS supports n×6.25GHz bandwidth power adjustment function, and the service signal will pass through the WSS after passing through the multiplexing and ROADM site, in this embodiment, for the adjustment of the power attenuation amount of the target optical channel, the target optical channel is divided into multiple sub-channels through WSS, and the power attenuation amount of the optical signal input to each sub-channel is adjusted separately until the signal flatness of the optical signal which is transmitted by means of the target optical channel meets the predetermined threshold. Wherein the WSS is arranged at the signal input terminal of the multiplex section to be adjusted.

In some embodiments, when dividing the target optical channel into multiple sub-channels through the WSS wavelength selector aforementioned, the target optical channel can be divided into multiple sub-channels according to the signal flatness and bandwidth size of the target optical channel, wherein there is no frequency gap overlap between the multiple sub-channels.

For example, when the signal flatness of the target optical channel is less than the first threshold, the target optical channel is divided into L first sub-channels according to the bandwidth size of the target optical channel.

When the signal flatness of the target optical channel is not less than the first threshold but less than the second threshold, the target optical channel is divided into M second sub-channels according to the bandwidth size of the target optical channel.

When the signal flatness of the target optical channel is not less than the second threshold, the target optical channel is divided into N third sub-channels according to the bandwidth size of the target optical channel.

Wherein L, M, and N are all integers greater than 1, and L<M<N, and the bandwidth size of the first sub-channel is greater than that of the second sub-channel, and the bandwidth size of the second sub-channel is greater than that of the third sub-channel.

For example, assuming the bandwidth size of the target optical channel is 150GHz, the first threshold is 3dB, and the second threshold is 7dB, when the signal flatness is less than 3dB, the target optical channel can be divided into three 50GHz sub-channels; when the signal flatness is greater than 3dB but less than 7dB, the target optical channel can be divided into four 37.5GHz sub-channels; when the signal flatness is greater than 7dB, the target optical channel can be divided into six 25GHz sub-channels.

In should be noted that, when dividing the above-mentioned sub-channels in the present application, in addition to the fact that the bandwidth size of each sub-channel provided in the previous example is the same, the bandwidth size of each sub-channel obtained from the division can also be different according to actual needs, to ensure the flexibility and adaptability of signal flatness adjustment.

Of course, the more sub-channels there are, the better the optimization of signal flatness for the multiplex section to be adjusted, but the algorithm complexity will increase.

Based on this, in one implementation, when adjusting the power attenuation amount of each sub-channel separately, the reference power can be determined according to the signal flatness of the target optical channel, and then for each sub channel, the power attenuation amount of the sub-channel can be adjusted according to the difference between the reference power and the power at the center frequency of the sub-channel. There can be multiple ways to determine the reference power, such as selecting the optical power corresponding to the frequency point in the frequency range of the target optical channel (or sub-channel) as the reference power, there is no limitation here.

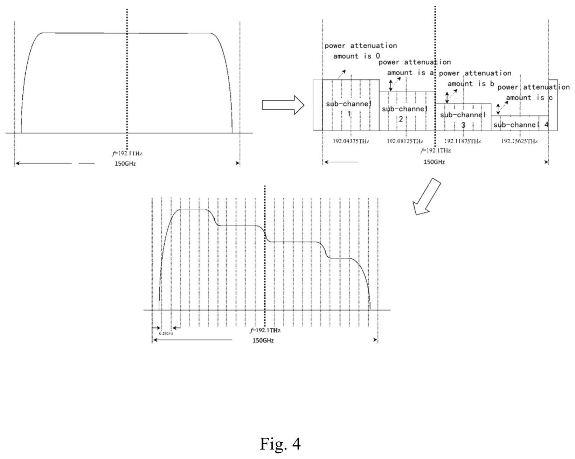

For example, referring to Fig. 4, assuming the determined reference power is P and the power at the center frequency of the divided sub-channels is P1, P2, P3, and P4, then the attenuation amount corresponding to sub-channel 1 is a=P-P1, the attenuation amount corresponding to sub-channel 2 is b=P-P2, the attenuation amount corresponding to sub-channel 3 is c=P-P3, and the attenuation amount corresponding to sub-channel 4 is d=P-P4. When adjusting the power attenuation amount of each sub-channel, if a, b, c, and d are positive numbers, it can be considered that the attenuation amount of the corresponding sub-channel is increased, and if they are negative numbers, it can be considered that the attenuation amount is decreased.

In one implementation, considering the wide bandwidth of the transmission channel occupied by signal transmission in DWDM systems (such as channel bandwidth greater than 100GHz), the different gains of optical power amplifiers can also cause non-flatness in the transmission channel, affecting the transmission performance of DWDM systems. For example, optical amplifiers have different gains at different frequency points. When the frequency range occupied by the transmission channel is small, the gain within the transmission channel can be considered as a constant. When the frequency range occupied by the transmission channel increases, the difference in gain between the maximum and minimum frequency points within the entire transmission channel cannot be ignored, which in turn makes the gain non-flatness in the transmission channel not negligible. Based on this, when the signal (also known as an optical signal or service signal) is transmitted through this transmission channel, the gain non-flatness of the optical amplifier in the transmission channel will be transmitted to the signal, resulting in a decrease in the signal-to-noise ratio on the low power side of the signal, and in severe cases, the loss of effective information in the signal, affecting the transmission performance of the DWDM system.

In this regard, in this embodiment, after completing the signal flatness adjustment caused by fiber attenuation through WSS, the total output power of each optical power amplifier in the multiplex section to be adjusted can be further adjusted to the target power, wherein the target power can be determined in the network planning stage, such as a single wave power of 5dBm at a wavelength of 192.1 THz.

It should be noted that, due to the optical amplifier port cannot maintain the power of the single channel signal, the total output power of the optical amplifier can be adjusted to be equal to the single channel signal multiplied by the total wave number. At this time, it can be considered that the single wave power has met the target power requirement. For example, if the target power of the 192.1THz single channel signal wavelength is 5dBm and the total wave number of the system is 40, then the output power of each optical amplifier passed through which the 192.1 THz channel service signal is transmitted end-to-end is: 5 + 10 * log10 (40) = 21dBm.

In this embodiment, for the scenario where the channel bandwidth occupied by signal transmission in the DWDM system is wide, WSS is used to divide the transmission channel occupied by the signal into multiple sub-channels, and combined with the non-flatness characteristics of fiber loss and optical amplifier gain, each sub-channel of WSS is used to pre-edit the entire multiplex section to be adjusted to compensate for the transmission channel non-flatness caused by optical fiber loss and optical amplifier gain. This ensures that the flatness of the entire signal after passing through this transmission system meets the reception performance requirements.

Of course, the present application can also be applied to scenarios where the channel bandwidth occupied by signal transmission is relatively small. However, it should be noted that due to the channel non-flatness is very small within a smaller channel bandwidth, and is limited by the accuracy of WSS in adjusting the channel flatness, the benefits of continuing to use the aforementioned signal flatness adjustment scheme provided in the present application will be significantly reduced, and the algorithm complexity will be significantly increased compared to the channel pre-editing scheme without WSS. Therefore, the impact of channel non-flatness on service signals can be ignored within the smaller channel bandwidth.

Based on the description of the signal flatness adjustment method mentioned above, further exemplary explanations of the signal flatness adjustment process provided in the present application will be provided in conjunction with Figs. 1, 2, and 5a-5d. The content is as follows.

Wherein assuming that the signal flatness adjustment scheme provided in the present application is applied to the transmission scenario of 400G Quadrature Phase Shift Keying (QPSK) 130G Baud signal at an interval of 150GHz, that is, according to the transmission and channel configuration requirements of the DWDM system, assuming that the DWDM system is a 40 wave system, the wavelength of the service signal output by the OTU is 192.1THz, 400G QPSK 130GBaud, and the channel occupied by the signal end-to-end transmission is 150GHz, first configure the bandwidth of all WSS channels with a central wavelength of 192.1 THz through which services are transmitted end-to-end to 150 GHz, that is, configure the bandwidth of all channels with a central wavelength of 192.1 THz, including WSS1, WSS3 and WSS4 at ROADM1 site, and WSS3, WSS4, and WSS2 at ROADM2 site, to 150 GHz.

And according to the system power requirements, adjust the 192.1 THz signal power at each OA output end in the link to the target power (set during the network planning phase), such as the single-wave power at 192.1 THz wavelength is 5dBm.

Based on this, assuming that the signal of each multiplex section is affected by non-flatness fiber loss and non-flatness gain of optical amplifiers, that is, there are target optical channels in each multiplex section that do not meet the predetermined threshold, then for DWDM systems, the adjustment process of signal flatness involved is as follows.

S501: the multiplex section in the DWDM system is divided. As shown in Fig. 1, the start point of the OTM site to ROADM1 site can be defined as multiplex section 1, ROADM1 site to ROADM2 site can be defined as multiplex section 2, and ROADM2 site to the end point of the OTM site can be defined as multiplex section 3, and adjust the signal flatness of the 192.1THz channel in each multiplex section one by one.

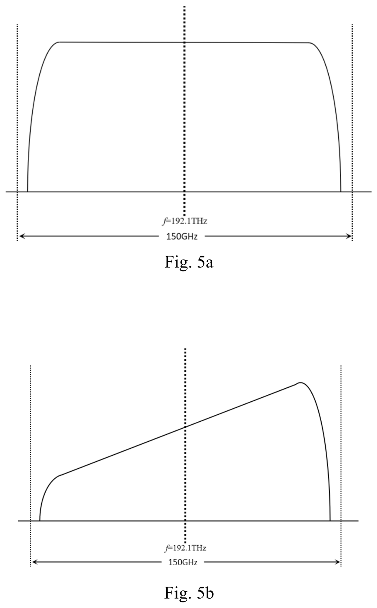

S502: assuming the signal flatness of the 192.1 THz channel of multiplex section 1 is adjusted first, then, as shown in Fig. 1, OPM1 can be used to detect the signal spectrum sent by multiplex section 1 (as shown in Fig. 5a), which only passes through WSS1 and OBA and is close to the OTU output spectrum.

And, as shown in Fig. 2, the ROADM1 site OPM3 can be used to detect the received signal spectrum of the 192.1THz channel. This spectrum is the signal spectrum of the signal sent by the start point OTU of the OTM site, passing through WSS1, OBA, and fiber optic span 1, OA1, fiber optic span 2 and ROADM1 site OA7, as shown in Fig. 5b.

S503: combining with OPM3 at the ROADM1 site, the spectral flatness of the signal received on the 192.1 THz channel is detected, the 192.1 THz channel is divided into several sub-channels as needed through WSS1. The bandwidth of each sub-channel is n×6.25 GHz (n≥1). The bandwidth of each sub-channel can be different, and there is no frequency gap overlap between each sub-channel. The total bandwidth of all sub-channels is 150 GHz.

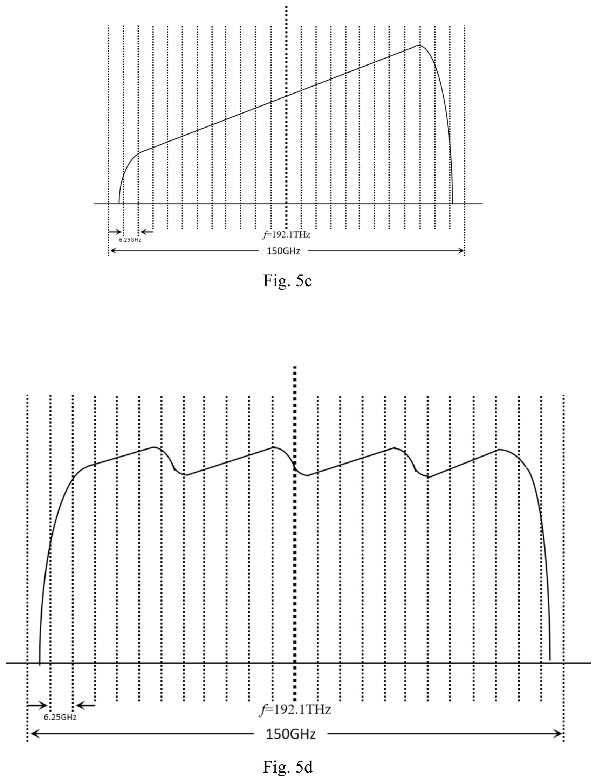

It should be noted that when dividing sub-channels, according to the characteristics of WSS, the minimum bandwidth of sub-channels can be 6.25GHz, which means that the entire channel can be divided into up to 24 6.25GHz sub-channels, as shown in Fig. 5c.

S504: combining with OPM3 at the ROADM1 site, the spectral flatness of the signal received on the 192.1 THz channel is detected, and the power attenuation amount of sub-channel respectively is adjusted, the adjustment process can be shown in Fig. 4.

S505: OPM3 at the ROADM1 site is used to detect the spectral flatness of the received signal on the 192.1 THz channel (the spectrum is shown in Fig. 5d), in order to determine whether the adjusted signal flatness meets the predetermined threshold.

S506: if the spectral flatness of the received signal on the 192.1 THz channel detected by OPM3 at ROADM1 site does not meet the predetermined threshold, S504 and S505 are repeated, the power attenuation amount of each sub-channel of WSS1 is continuously adjusted until the signal flatness meets the predetermined threshold.

S507: if the spectral flatness of the received signal on the 192.1 THz channel detected by OPM3 at ROADM1 site meets the predetermined threshold, the signal flatness of each optical channel in the multiplex section 1 is adjusted according to S503-S506.

S508: after adjusting the signal flatness of each channel in multiplex section 1, since the output power of each OA within the multiplex section 1 may vary, the gain of each OA is further adjusted to ensure that the output power of each OA meets the OA output power requirement, such as meeting the target power.

S509: after adjusting the signal flatness for multiplex section 1, the signal flatness of each optical channel in multiplex section 2 and 3 is adjusted according to S503-S508. In multiplex section 2, the signal flatness of each channel is detected using OPM3 at the ROADM2 site and signal flatness adjustment is performed using WSS4 at the ROADM1 site; in multiplex section 3, the signal flatness of each channel is detected using OPM2 at the end point of OTM site and signal flatness adjustment is performed using WSS4 at the ROADM2 site.

S510: completing signal flatness adjustment for each channel in multiplex sections 1, 2, and 3 confirms the completion of signal flatness adjustment for end-to-end transmission in the DWDM system.

It can be understood that the implementation of S501-S510 can be referenced to the relevant description in the aforementioned method embodiment and will not be repeated here.

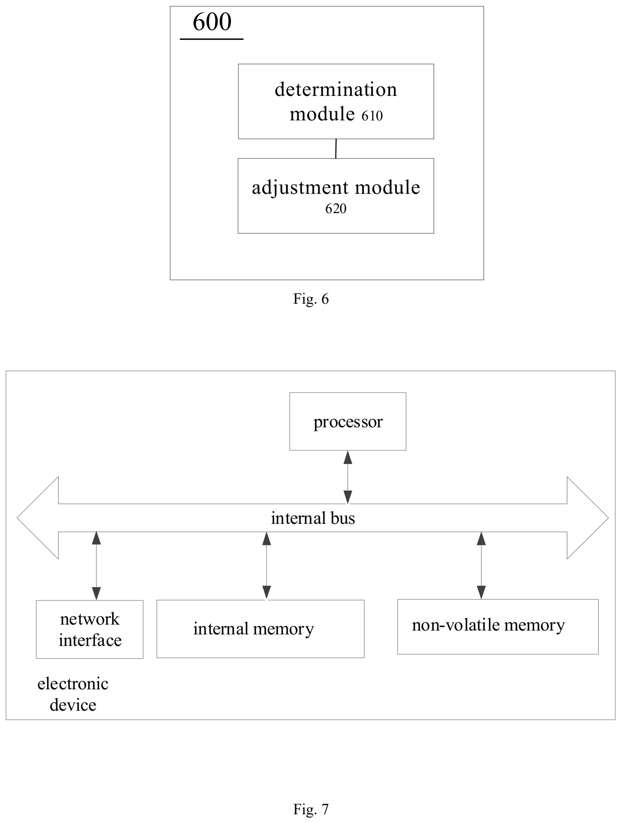

Fig. 6 is a schematic diagram of the structure of the signal flatness adjustment device 600 provided in the embodiment of the present application. The device 600 comprises: a determination module 610 for determining signal flatness of each optical channel among a plurality of optical channels of the multiplex section to be adjusted in the DWDM system, and taking the optical channel, the signal flatness of which does not meet the predetermined threshold, among the plurality of optical channels as the target optical channel; and an adjustment module 620 for adjusting the power attenuation amount of the target optical channel until the signal flatness of the optical signal which is transmitted by means of the target optical channel meets the predetermined threshold.

In some embodiments, the adjustment module 620 for adjusting the power attenuation amount of the target optical channel until the signal flatness of the optical signal which is transmitted by means of the target optical channel meets the predetermined threshold, comprises: dividing the target optical channel into multiple sub-channels through the wavelength selector WSS, wherein the WSS is arranged at the signal input terminal of the multiplex section to be adjusted; adjusting the power attenuation amount of the optical signals input to each sub-channel separately until the signal flatness of the optical signal which is transmitted by means of the target optical channel meets the predetermined threshold.

In some embodiments, the adjustment module 620 dividing the target optical channel into multiple sub-channels through the wavelength selector WSS, comprises: dividing the target optical channel into multiple sub-channels according to the signal flatness and bandwidth size of the target optical channel; wherein there is no frequency gap overlap between the multiple sub-channels.

In some embodiments, the adjustment module 620 dividing the target optical channel into multiple sub-channels according to the signal flatness and bandwidth size of the target optical channel, comprises at least one of the following: when the signal flatness of the target optical channel is less than the first threshold, dividing the target optical channel into L first sub-channels according to the bandwidth size of the target optical channel; when the signal flatness of the target optical channel is not less than the first threshold but less than the second threshold, dividing the target optical channel into M second sub-channels according to the bandwidth size of the target optical channel; when the signal flatness of the target optical channel is not less than the second threshold, dividing the target optical channel into N third sub-channels according to the bandwidth size of the target optical channel; wherein L, M, and N are all integers greater than 1, and L<M<N, and the bandwidth size of the first sub-channel is greater than that of the second sub-channel, and the bandwidth size of the second sub-channel is greater than that of the third sub-channel.

In some embodiments, the bandwidth size of each sub-channel is the same.

In some embodiments, the adjustment module 620 adjusting the power attenuation amount of each sub-channel separately, comprises: determining the reference power according to the signal flatness of the target optical channel; for each sub-channel, adjusting the power attenuation amount of the sub-channel according to the difference between the reference power and the power at center frequency of the sub-channel.

In some embodiments, the determination module 610 determining signal flatness of each optical channel among the plurality of optical channels of the multiplex section to be adjusted in the DWDM system, comprises: monitoring the spectral shape of each optical channel in the multiplex section to be adjusted through an optical monitoring module OPM, wherein the OPM is arranged at signal output terminal of the multiplex section to be adjusted; determining the signal flatness of each optical channel according to the spectral shape of each optical channel.

In some embodiments, after the adjustment module 620 adjusting the power attenuation amount of the target optical channel until the signal flatness of the optical signal which is transmitted by means of the target optical channel meets the predetermined threshold, the method further comprises: adjusting the total output power of each optical amplifier in the multiplex section to be adjusted to the target power.

In some embodiments, the adjustment module 620 is further used for when there are multiple multiplex sections to be adjusted in the DWDM system, according to the optical signal transmission direction in the DWDM system, adjusting the signal flatness of each multiplex section to be adjusted in sequence until the signal flatness of each multiplex section to be adjusted meets the predetermined threshold.

The device 600 provided in the embodiments of the present application can execute the various methods described in the aforementioned method embodiments and achieve the functions and beneficial effects of the methods described in the aforementioned method embodiments, which will not be described in detail here.

Fig. 7 shows a schematic diagram of the hardware structure of an electronic device that implements the embodiments of the present application. Referring to this figure, at the hardware level, the electronic device comprises a processor, and in some embodiments, an internal bus, network interface, and storage. Among them, the storage may include an internal memory, such as high-speed random-access memory (RAM), and may also comprise a non-volatile memory, such as at least one disk storage. In addition, the electronic device may also comprise hardware required for other businesses.

The processor, network interface, and memory can be interconnected through an internal bus, which can be the Industry Standard Architecture (ISA) bus, Peripheral Component Interconnect (PCI) bus, or Extended Industry Standard Architecture (EISA) bus. The bus can be divided into address bus, data bus, control bus, etc. For ease of representation, only one bidirectional arrow is used in the figure, but it does not indicate that there is only one bus or one type of bus.

A memory is used to store programs. Specifically, the program may include program code, which includes computer operation instructions. A memory can include both an internal memory and a non-volatile memory, and provide instructions and data to the processor.

The processor reads the corresponding computer program from the non-volatile memory into the internal memory and runs it, forming a device that locates the specified user at the logical level. The processor executes the program stored in the memory and is specifically used to execute the methods disclosed in the embodiments shown in Fig. 2 and achieve the functions and beneficial effects of the various methods described in the previous embodiments. It will not be repeated here.

The methods disclosed in the embodiments shown in Fig. 2 of the present application can be applied to processors or implemented by processors. A processor may be an integrated circuit chip with signal processing capabilities. In the implementation process, each step of the above method can be completed through hardware integrated logic circuits or software instructions in the processor. The above-mentioned processor can be a general-purpose processor, including a Central Processing Unit (CPU), a Network Processor (NP), etc; It can also be a Digital Signal Processor (DSP), Application Specific Integrated Circuit (ASIC), Field Programmable Gate Array (FPGA), or other programmable logic devices, discrete gates or transistor logic devices, or discrete hardware components. The disclosed methods, steps, and logical diagrams in the embodiments of the present application can be implemented or executed. A general processor may be a microprocessor or any conventional processor, etc. The steps of the method disclosed in the embodiments of the present application may be directly implemented by a hardware decoding processor, or implemented by a combination of hardware and software modules in the decoding processor. The software module can be located in a storage medium well-known in the art, such as random access memory, flash memory, read-only memory, programmable read-only memory, electrically erasable programmable memory, registers, etc. The storage medium is located in the memory, and the processor reads the information in the memory and, in conjunction with its hardware, completes the steps of the above method.

The electronic device can also execute the various methods described in the previous method embodiments, and achieve the functions and beneficial effects of the various methods described in the previous method embodiments, which will not be repeated here.

Of course, besides software implementation, the electronic device of the present application does not exclude other implementation methods, such as logic devices or a combination of software and hardware. That is to say, the executing subject of the following processing flow is not limited to each logic unit, but can also be hardware or logic devices.

It can be understood that the aforementioned electronic device can be the master control device of the DWDM system to realize signal control in the DWDM system, such as adjusting the flatness of the optical signal, etc., or it can be a control device set at a certain site in the DWDM system to be used for signal control at the site, such as adjusting the flatness of the optical signal, etc., without limitation here.

The present embodiment also proposes a computer-readable storage medium that stores one or more programs. When executed by an electronic device comprising multiple application programs, the one or more programs cause the electronic device to perform the methods disclosed in the embodiments shown in Fig. 2 and achieve the functions and beneficial effects of the methods described in the previous embodiments, which will not be repeated here.

Among them, the computer-readable storage medium includes Read Only Memory (ROM), Random Access Memory (RAM), magnetic disk or optical disk, etc.

Furthermore, the embodiments of the present application also provide a computer program product, which comprises a computer program stored on a non-temporary computer-readable storage medium, the computer program comprising program instructions. When the program instructions are executed by a computer, the following process is implemented: the methods disclosed in the embodiments shown in Figs. 1-3 are implemented and the functions and beneficial effects of the methods described in the previous embodiments are achieved, which will not be repeated here.

In summary, the above description is only a preferred embodiment of the present application and is not intended to limit the protection scope of the present application. Any modifications, equivalent substitutions, improvements, etc. made within the spirit and principles of the present application shall be included within the protection scope of the present application.

The system, device, module, or unit described in the above embodiments can be implemented by computer chips or entities, or by products with certain functions. A typical implementation device is a computer. Specifically, computers can include personal computers, laptops, cellular phones, camera phones, smartphones, personal digital assistants, media players, navigation devices, email devices, game consoles, tablets, wearable devices, or any combination of these devices.

Computer readable media, including permanent and non-permanent, removable and non-removable media, can be used by any method or technology to achieve information storage. Information can be computer-readable instructions, data structures, modules of programs, or other data. Examples of storage medium for computers include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disc read-only memory (CD-ROM), digital versatile disc (DVD) or other optical storage, magnetic tape cartridges, magnetic disk storage or other magnetic storage devices, or any other non-transmission medium that can be used to store information that can be accessed by computing devices. According to the definition in this article, computer-readable media does not include transitory computer-readable media such as modulated data signals and carriers.

It should be noted that, the terms "include", "comprises" or any other variants thereof herein are intended to cover non-exclusive inclusion, so that a process, method, article or apparatus including a series of elements includes not only those elements, but also other elements not explicitly listed, or also includes elements inherent to such process, method, article or apparatus. In the absence of further restrictions, an element defined by the sentence "comprising a ..." does not exclude the presence of other identical elements in the process, method, article or apparatus comprising the element.

The various embodiments in this manual are described in a progressive manner, and the same and similar parts between each embodiment can be referred to each other. Each embodiment focuses on the differences from other embodiments. Especially for the system implementation example, due to its basic similarity to the method embodiment, the description is relatively simple. For relevant information, please refer to the partial explanation of the method embodiment.

## Claims

1. A signal flatness adjustment method, comprising:
determining signal flatness of each optical channel among a plurality of optical channels of a multiplex section to be adjusted in a DWDM system;
taking an optical channel, the signal flatness of which does not meet a predetermined threshold, among the plurality of optical channels as a target optical channel;
adjusting a power attenuation amount of the target optical channel until the signal flatness of an optical signal which is transmitted by means of the target optical channel meets the predetermined threshold.

2. The method according to claim 1, wherein adjusting a power attenuation amount of the target optical channel until the signal flatness of an optical signal which is transmitted by means of the target optical channel meets the predetermined threshold, comprises:
dividing the target optical channel into multiple sub-channels through a wavelength selector WSS, wherein the WSS is arranged at a signal input terminal of the multiplex section to be adjusted;
adjusting a power attenuation amount of the optical signals input to each sub-channel separately until the signal flatness of the optical signal which is transmitted by means of the target optical channel meets the predetermined threshold.

3. The method according to claim 2, wherein dividing the target optical channel into multiple sub-channels through a wavelength selector WSS, comprises:
dividing the target optical channel into multiple sub-channels according to the signal flatness and bandwidth size of the target optical channel;
wherein there is no frequency gap overlap between the multiple sub-channels.

4. The method according to claim 3, wherein dividing the target optical channel into multiple sub-channels according to the signal flatness and bandwidth size of the target optical channel, comprises at least one of the following:
when the signal flatness of the target optical channel is less than a first threshold, dividing the target optical channel into L first sub-channels according to the bandwidth size of the target optical channel;
when the signal flatness of the target optical channel is not less than the first threshold but less than a second threshold, dividing the target optical channel into M second sub-channels according to the bandwidth size of the target optical channel;
when the signal flatness of the target optical channel is not less than the second threshold, dividing the target optical channel into N third sub-channels according to the bandwidth size of the target optical channel;
wherein L, M, and N are all integers greater than 1, and L<M<N, and the bandwidth size of the first sub-channel is greater than that of the second sub-channel, and the bandwidth size of the second sub-channel is greater than that of the third sub-channel.

5. The method according to claim 3, wherein the bandwidth size of each sub-channel is the same.

6. The method according to claim 2, wherein adjusting a power attenuation amount of each sub-channel separately, comprises:
determining reference power according to the signal flatness of the target optical channel;
adjusting, for each sub-channel, the power attenuation amount of the sub-channel according to the difference between the reference power and the power at center frequency of the sub-channel.

7. The method according to claim 1, wherein determining signal flatness of each optical channel among a plurality of optical channels of a multiplex section to be adjusted in a DWDM system, comprises:
monitoring spectral shape of each optical channel in the multiplex section to be adjusted through an optical monitoring module OPM, wherein the OPM is arranged at a signal output terminal of the multiplex section to be adjusted;
determining the signal flatness of each optical channel according to the spectral shape of each optical channel.

8. The method according to any one of claims 1-7, wherein after adjusting a power attenuation amount of the target optical channel until the signal flatness of an optical signal which is transmitted by means of the target optical channel meets the predetermined threshold, the method further comprises:
adjusting the total output power of each optical amplifier in the multiplex section to be adjusted to a target power.

9. The method according to any one of claims 1-7, further comprising:
when there are multiple multiplex sections to be adjusted in the DWDM system,
according to the optical signal transmission direction in the DWDM system, adjusting the signal flatness of each multiplex section to be adjusted in sequence until the signal flatness of each multiplex section to be adjusted meets the predetermined threshold.

10. An electronic device, comprising:
a processor; and
a memory arranged to store computer-executable instructions, wherein the computer-executable instructions, when executed, cause the processor to implement the steps of the method according to any one of claims 1 to 9.

11. A computer-readable medium, having one or more programs stored thereon, wherein the one or more programs, when executed by an electronic device comprising multiple application programs, cause the electronic device to implement the steps of the method according to any one of claims 1 to 9.
